# EUROPÄISCHE PATENTSCHRIFT

(11) **EP 1 845 440 B1**
(45) Veröffentlichungstag und Bekanntmachung des Hinweises auf die Patenterteilung: **29.08.2018**
(21) Anmeldenummer: 07105684.0
(22) Anmeldetag: 04.04.2007
(51) Int. Cl.: G06F 3/12

(54) **Verfahren und Anordnung zum Drucken aus Web-Anwendungen heraus sowie ein entsprechendes Computerprogramm und ein entsprechendes computerlesbares Speichermedium**
Method and assembly for printing from web applications and the corresponding computer program and the corresponding machine readable storage medium
Procédé et agencement destinés à l'impression à partir d'application Internet tout comme programme informatique correspondant et un support de mémoire lisible par ordinateur correspondant

(30) Priorität: 12.04.2006 DE 102006017761; 03.07.2006 DE 102006031211; 26.04.2006 US 745672 P
(43) Veröffentlichungstag der Anmeldung: 17.10.2007
(73) Patentinhaber: Cortado AG, 10559 Berlin (DE)
(72) Erfinder: Trappe, Bernd, Berlin 12489 (DE); Preußler, Danny, Berlin 10249 (DE)
(74) Vertreter: Gulde & Partner

(56) Entgegenhaltungen:
- EP-A- 1 422 609
- US-A1- 2002 122 201
- US-A1- 2002 184 305
- US-A1- 2003 197 892

## Beschreibung

Die Erfindung betrifft ein Verfahren und eine Anordnung zum Drucken aus Web-Anwendungen heraus sowie ein entsprechendes Computerprogramm und ein entsprechendes computerlesbares Speichermedium, welche insbesondere einsetzbar sind, um die Druckfunktionalität von Web-Anwendungen, beispielsweise durch Ermöglichung des Ausdrucks zusätzlicher Formate, zu verbessern.

Herkömmliche Lösungen für das Ausdrucken aus Web-Anwendungen heraus benutzen stets die Druckfunktionalität der auf dem Client-Rechner installierten Web-Browser. In der Regel werden dabei Inhalte von Webseiten ausgedruckt, indem der Druckbutton in der Menüleiste des Web-Browsers betätigt wird. Dieser ruft ein auf dem Client-Rechner installiertes Druckerobjekt samt Druckertreiber auf, über das dann die Webseite ausgedruckt wird.

Eine andere bekannte Lösung sieht einen "Druckbutton" vor, der in eine Webseite integriert ist. Bei Betätigung eines solchen "Druckbuttons" wird auf dem Server, auf dem die Anwendung läuft - im Folgenden als Anwendungsserver bezeichnet -, i.d.R. eine neue HTML-Seite erzeugt, die eine besonders aufbereitete Darstellung der zum Ausdruck bestimmten Inhalte enthält. Insbesondere können beispielsweise störende Elemente, wie etwa der "Druckbutton", aus der Darstellung entfernt werden. Diese so für den Ausdruck aufbereitete HTML-Seite wird an den Client-Rechner übermittelt und anschließend wiederum mit der Druckfunktionalität des Web-Browsers ausgedruckt. Der Ausdruck erfolgt auch hier durch die Druckfunktionalität des Web-Browsers.

Weiterhin gibt es Lösungen, bei denen durch Betätigen des Druckbuttons direkt der auf dem Client-Rechner installierte Standarddrucker angesprochen und der Druck auf diesen initiiert wird. In diesem Falle gleicht der Ablauf dem der oben genannten herkömmlichen Lösungen, in dem die angezeigte HTML-Seite direkt auf einem clientseitig installierten Drucker ausgegeben wird.

Drucken aus einer Webapplikation ist in US 2002/0184305 A1 beschrieben. Weiterer Stand der Technik ist in US2003/0197892 A1 und EP 1 422 609 A2 beschrieben.

Nachteilig bei allen aufgeführten Lösungen ist insbesondere, dass der direkte Ausdruck aus Web-Anwendungen heraus stets auf HTML-Dokumente beschränkt ist. Web-Browser, die den Ausdruck von z.B..pdf-Dokumenten oder Office-Dokumenten (wie Microsoft Word, Excel, Powerpoint) aus dem Web-Browser heraus ermöglichen, existieren zwar; diese setzen aber immer die entsprechende Anwendung oder einer zur entsprechenden Anwendung kompatible Anwendung auf dem Client-Rechner voraus. Der Ausdruck erfolgt dann allerdings nicht direkt aus dem Browser heraus, sondern aus der zur Ansicht aufgerufenen Anwendung.

Es ist daher Aufgabe der vorliegenden Erfindung, ein Verfahren und Anordnung zum Drucken aus Web-Anwendungen heraus sowie ein entsprechendes Computerprogramm und ein entsprechendes computerlesbares Speichermedium bereitzustellen, welche den genannten Nachteil beheben und es insbesondere gestatten, auch aus Web-Anwendungen heraus beliebige Formate auszudrucken.

Diese Aufgabe wird erfindungsgemäß durch die Merkmale in den Ansprüchen 1, 11, 16 und 18 gelöst. Zweckmäßige Ausgestaltungen der Erfindung sind in den Unteransprüchen enthalten.

Ein besonderer Vorteil der Erfindung besteht darin, dass bei dem erfindungsgemäßen Verfahren beliebige Formate aus Web-Anwendungen heraus ausgedruckt werden können. Dies wird dadurch erreicht, dass eine Web-Anwendung in ihrer Darstellung in einem Web-Browser eine Druckmöglichkeit bereitstellt, die durch den Nutzer des Endgeräts bedient werden kann. Eine solche Druckmöglichkeit kann beispielsweise ein in die Webseite integrierter Druckbutton sein, vorzugsweise ein normaler Webformular-Button. (Die Druckmöglichkeit wird also nicht in das Menü des Web-Browsers integriert.) Bei Betätigung dieses Druckbuttons durch den Nutzer werden an den Server, auf dem die Web-Anwendung läuft (Anwendungsserver), Signale gesendet, durch welche der Anwendungsserver veranlasst wird, auszudruckende Daten aufzubereiten, und dem Endgerät Daten zu übermitteln, die den Browser veranlassen, ein auf dem Endgerät installiertes Computerprogramm zu starten, wobei das Computerprogramm einen Konfigurations-Request an den Druckserver sendet und vom Druckserver Konfigurationsdaten erhält; wobei das Computerprogramm die erhaltenen Konfigurationsdaten durch weitere, Angaben, die mit Hilfe eines Eingabemittels, welches durch das Computerprogramm zur Verfügung gestellt wird, eingegeben wurden, ergänzt, und wenigstens einen Teil der ergänzten Konfigurationsdaten an den Server überträgt, wobei der Server auszudruckende Dateien zusammen mit den übertragenen Teil der ergänzten Konfigurationsdateien und einer Adresse eines Netzwerkdruckers, eines Faxdruckers und/oder des Endgerätes an den Druckserver übermittelt. Dieser Druckserver kann durch das den Druck auslösende Endgerät vorgegeben oder durch den Anwendungsserver festgelegt werden. Auf dem Druckserver wird nun ein Druckvorgang gestartet und die durch den Druckvorgang erzeugten Daten werden an das den Druck auslösende Endgerät gesendet und dort ausgedruckt oder auch nur als Seitenansicht auf dem Display des Endgerätes dargestellt. Vorzugsweise werden die durch den Druckvorgang erzeugten Daten als Datenstrom an das Endgerät übertragen (gestreamt). In einer bevorzugten Ausführungsform des erfindungsgemäßen Verfahrens erfolgt der Ausdruck über einen lokal an das Endgerät angeschlossenen Drucker. Besonders vorteilhaft ist die Anwendung des erfindungsgemäßen Verfahrens für mobile Endgeräte. Alternativ können die durch den Druckvorgang erzeugten Daten von dem Druckserver auch an einen Netzwerkdrucker gesendet werden.

In einer bevorzugten Ausführungsform des erfindungsgemäßen Verfahrens ist vorgesehen, dass das Programm zur Bereitstellung der Eingabemittel als eine für den genannten MIME-Typ verantwortliche Anwendung in Form eines Plugins für den Browser installiert ist. Das ist insbesondere deshalb ein Vorteil, weil dadurch keine spezielle Schnittstelle zwischen dem Browser und dem Computerprogramm zur Bereitstellung der Eingabemittel vorgesehen werden muss. Es wird auf die Standard-Funktionalität des Browsers zur Behandlung von Plugins zurückgegriffen. Es ist insbesondere vorgesehen, dass die von dem Anwendungsserver an das Endgerät zurückgesandten Daten einen MIME-Typ (MIME = Mulitipurpose Internet Mail Extensions) aufweisen, welcher den Browser veranlasst, das als Plugin ausgestaltete Computerprogramm zur Bereitstellung der Eingabemittel zu starten. Alle diese Kommunikationen zwischen dem Anwendungsserver und dem Endgerät sowie zwischen dem Browser und dem Computerprogramm zur Bereitstellung der Eingabemittel erfolgen somit auf Basis der Web-Standards. Der Installationsaufwand zur Integration dieser Druckfunktionalität in die Web-Anwendungssoftware bleibt somit minimal.

Nachdem das Computerprogramm gestartet und die Eingabemittel auf der Bedienoberfläche des Endgerätes bereitgestellt wurden, kann der Nutzer Angaben zur Steuerung des Druckvorganges über diese Eingabemittel eingeben. Darüber hinaus können mit diesem Computerprogramm weitere, auf dem Endgerät verfügbaren Informationen, wie z.B. Standort, Verbindungsart, Endgeräte-Identifikation oder Betriebssystem, ermittelt werden.

Die Übermittlung des Standortes an den Druckserver kann dazu genutzt werden, dass dem Nutzer durch den Druckserver solche Drucker zur Ausgabe der auszudruckende Daten angeboten werden, die sich in räumlicher Nähe des Standortes befinden. Mit dieser Lösung wird ein flexibles ortsabhängiges Drucken ermöglicht.

Die Standortdaten können beispielsweise per Hand in die Eingabemittel eingegeben (Postleitzahl; Abteilung oder Zweigniederlassung eines Unternehmens, Filiale eines Geschäftsbetriebs oder dgl.), insbesondere bei mobilen Endgeräten als Zelleninformationen eines Mobilfunkbetreibers oder durch ein in das Endgerät integriertes GPS-Modul (geographische Koordinaten) bereitgestellt werden.

Eine bevorzugte Ausführungsform der Erfindung sieht vor, dass die Daten wiederum auf einem Web-Standardweg, beispielsweise über einen http-Upload, an den Anwendungsserver übertragen werden.

Eine andere bevorzugte Ausführungsform des erfindungsgemäßen Verfahrens sieht vor, dass die von dem Anwendungsserver an den Druckserver zu übersendenden Daten durch eine E-Mail an den Druckserver übertragen werden. Eine bevorzugte Ausführungsform sieht dabei vor, dass die zu druckenden Daten als E-Mail-Anhang angefügt werden.

Eine Anordnung zum Drucken aus Web-Anwendungen heraus nach der Erfindung umfasst mindestens einen Server, auf dem die Web-Anwendung läuft (Anwendungsserver), mindestens einen Druckserver und mindestens ein mit dem mindestens einen Anwendungsserver und dem mindestens einen Druckserver zusammenwirkendes Endgerät. Anwendungsserver, Druckserver und Endgerät sind dabei wenigstens zeitweise durch Mittel zur Datenübertragung miteinander verbunden. Die Anordnung ist darüber hinaus so eingerichtet, dass ein Drucken aus Web-Anwendungen heraus durchführbar ist, indem eine in einem Browser des mindestens einen Endgeräts aufgerufene Web-Anwendung eine über Mittel zur Dateneingabe des mindestens einen Endgeräts bedienbare Druckmöglichkeiten bereitstellt, bei Betätigung der Druckmöglichkeit der mindestens eine Anwendungsserver veranlasst wird, auszudruckende Daten aufzubereiten, und dem Endgerät Daten zu übermitteln, die den Browser veranlassen, ein auf dem Endgerät installiertes Computerprogramm zu starten, wobei das Computerprogramm einen Konfigurations-Request an den Druckserver sendet und vom Druckserver Konfigurationsdaten erhält; wobei das Computerprogramm die erhaltenen Konfigurationsdaten durch weitere, Angaben, die mit Hilfe eines Eingabemittels, welches durch das Computerprogramm zur Verfügung gestellt wird, eingegeben wurden, ergänzt, und wenigstens einen Teil der ergänzten Konfigurationsdaten an den Server überträgt, wobei der Server auszudruckende Dateien zusammen mit den übertragenen Teil der ergänzten Konfigurationsdateien und einer Adresse eines Netzwerkdruckers, eines Faxdruckers und/oder des Endgerätes an den durch einen Nutzer des Endgerätes vorgegebenen Druckserver sendet, wobei auf dem vorgegebenen Druckserver ein Druckvorgang gestartet wird und die durch den Druckvorgang erzeugten Daten von dem Druckserver an den Netzwerkdrucker, den Faxdrucker oder an das Endgerät gesendet werden, wobei die Übersendung vorzugsweise als Datenstrom erfolgt.

In einer bevorzugten Ausführungsform der erfindungsgemäßen Anordnung ist vorgesehen, dass der mindestens eine Anwendungsserver und der mindestens eine Druckserver in ein Computernetz, wie beispielsweise ein Local Area Network (LAN), ein Metropolitan Area Network (MAN), ein Wide Area Network (WAN) oder das Internet, eingebunden sind.

Als besonders vorteilhaft erweist es sich, wenn das mindestens eine Endgerät ein mobiles Endgerät ist. Bei dem mobilen Endgerät kann es sich beispielsweise um
- ein Mobiltelefon,
- ein Handheld-Gerät,
- ein Personal Digital Assistent (PDA),
- ein mit Nachrichten-Signalisierungs-Services zusammenwirkendes mobiles Endgerät,
- ein Pocket PC oder
- ein Notebook
handeln.

Ein Computerprogramm zum Drucken aus Web-Anwendungen heraus ermöglicht es einer Datenverarbeitungseinrichtung, nachdem das Computerprogramm in Speichermittel des Computers geladen worden ist, ein erfindungsgemäßes Druckverfahren auszuführen, wobei eine in einem Browser eines Endgeräts aufgerufene Web-Anwendung eine über Mittel zur Dateneingabe des Endgeräts bedienbare Druckmöglichkeit bereitstellt, und bei Betätigung der Druckmöglichkeit ein Server, auf dem die Web-Anwendung läuft, veranlasst wird, auszudruckende Daten aufzubereiten, und dem Endgerät Daten zu übermitteln, die den Browser veranlassen, ein auf dem Endgerät installiertes Computerprogramm zu starten, wobei das Computerprogramm einen Konfigurations-Request an den Druckserver sendet und vom Druckserver Konfigurationsdaten erhält; wobei das Computerprogramm die erhaltenen Konfigurationsdaten durch weitere, Angaben, die mit Hilfe eines Eingabemittels, welches durch das Computerprogramm zur Verfügung gestellt wird, eingegeben wurden, ergänzt, und wenigstens einen Teil der ergänzten Konfigurationsdaten an den Server überträgt, wobei der Server auszudruckende Dateien zusammen mit den übertragenen Teil der ergänzten Konfigurationsdateien und einer Adresse eines Netzwerkdruckers, eines Faxdruckers und/oder des Endgerätes an einen durch einen Nutzer des Endgerätes vorgegebenen Druckserver sendet, wobei auf dem Druckserver ein Druckvorgang gestartet wird und die durch den Druckvorgang erzeugten Daten von dem Druckserver an den Netzwerkdrucker, den Faxdrucker oder an das Endgerät gesendet werden.

Das Computerprogramm umfasst dabei mehrere Module, wobei
- mindestens ein erstes Modul auf dem Anwendungsserver,
- mindestens ein zweites Modul auf dem Endgerät und
- mindestens ein drittes Modul auf dem Druckserver, installiert ist.

Solche Computerprogramme können beispielsweise (gegen Gebühr oder unentgeltlich, frei zugänglich oder passwortgeschützt) downloadbar in einem Daten- oder Kommunikationsnetzwerk bereitgestellt werden. Die so bereitgestellten Computerprogramme können dann durch ein Verfahren nutzbar gemacht werden, bei dem ein Computerprogramm nach Anspruch 20 aus einem elektronischen Datennetz, wie beispielsweise aus dem Internet, auf eine an das Datennetz angeschlossene Datenverarbeitungseinrichtung heruntergeladen wird.

Um das erfindungsgemäße Druckverfahren durchzuführen, ist vorgesehen, ein computerlesbares Speichermedium einzusetzen, auf dem ein Programm gespeichert ist, das es einer Datenverarbeitungseinrichtung ermöglicht, nachdem es in Speichermittel der Datenverarbeitungseinrichtung geladen worden ist, ein Verfahren zum Drucken aus Web-Anwendungen heraus durchzuführen, wobei eine in einem Browser eines Endgeräts aufgerufene Web-Anwendung eine über Mittel zur Dateneingabe des Endgerätes bedienbare Druckmöglichkeit bereitstellt, bei Betätigung der Druckmöglichkeit ein Server, auf dem die Web-Anwendung läuft, veranlasst wird, auszudruckende Daten aufzubereiten, und dem Endgerät Daten zu übermitteln, die den Browser veranlassen, ein auf dem Endgerät installiertes Computerprogramm zu starten, wobei das Computerprogramm einen Konfigurations-Request an den Druckserver sendet und vom Druckserver Konfigurationsdaten erhält; wobei das Computerprogramm die erhaltenen Konfigurationsdaten durch weitere, Angaben, die mit Hilfe eines Eingabemittels, welches durch das Computerprogramm zur Verfügung gestellt wird, eingegeben wurden, ergänzt, und wenigstens einen Teil der ergänzten Konfigurationsdaten an den Server überträgt, wobei der Server auszudruckende Dateien zusammen mit den übertragenen Teil der ergänzten Konfigurationsdateien und einer Adresse eines Netzwerkdruckers, eines Faxdruckers und/oder des Endgerätes an einen Druckserver sendet, auf dem Druckserver ein Druckvorgang gestartet wird und die durch den Druckvorgang erzeugten Daten von dem Druckserver an den Netzwerkdrucker, den Faxdrucker oder an das Endgerät gesendet werden.

Die Erfindung stellt somit ein Verfahren zur Integration der Druckausgabe in Web-Anwendungen für Client-Rechner, insbesondere für mobile Devices, bereit. Ein besonderer Vorteil der Erfindung besteht darin, dass eine Erstellung einer für die Web-Anwendung spezifischen, individuellen Software auf dem mobilen Device nicht erforderlich ist. Statt dessen wird eine Standard-Lösung für das Client-Endgerät (das mobile Device) bereitgestellt, die jeder Software Anbieter, der eine Web-Anwendung herstellt, verwenden kann, um die Web-Anwendung um das Drucken zu erweitern. Hierfür ist lediglich auf der Seite des Anwendungsservers eine Anpassung der Anwendung notwendig, durch die die Kommunikation zwischen Endgerät, Anwendungs- und Druckserver gesteuert wird.

Die Erfindung wird nachfolgend unter Bezugnahme auf die Figuren der Zeichnungen an einem Ausführungsbeispiel näher erläutert. Es zeigen:

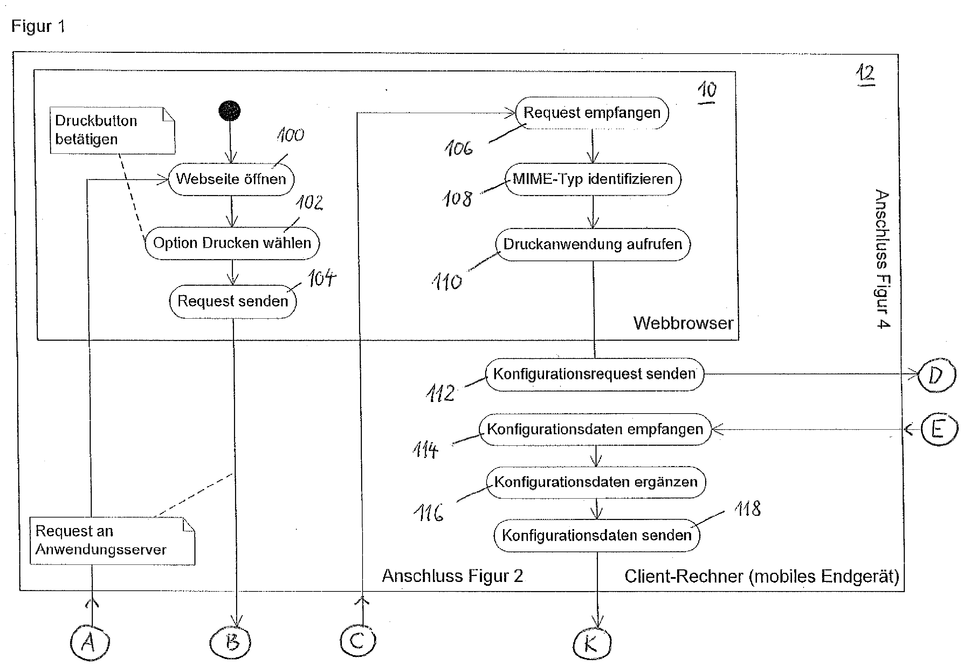

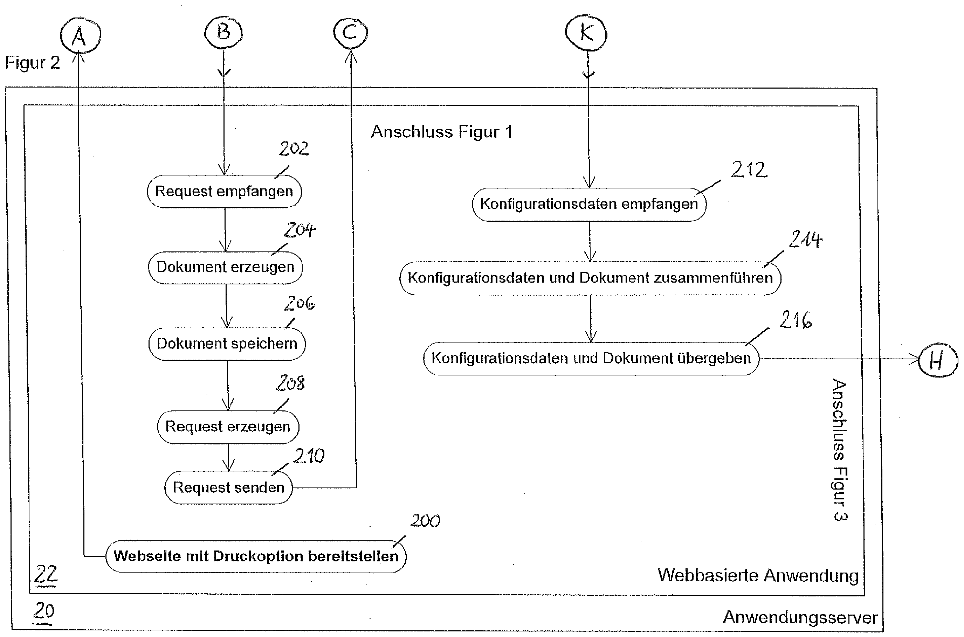

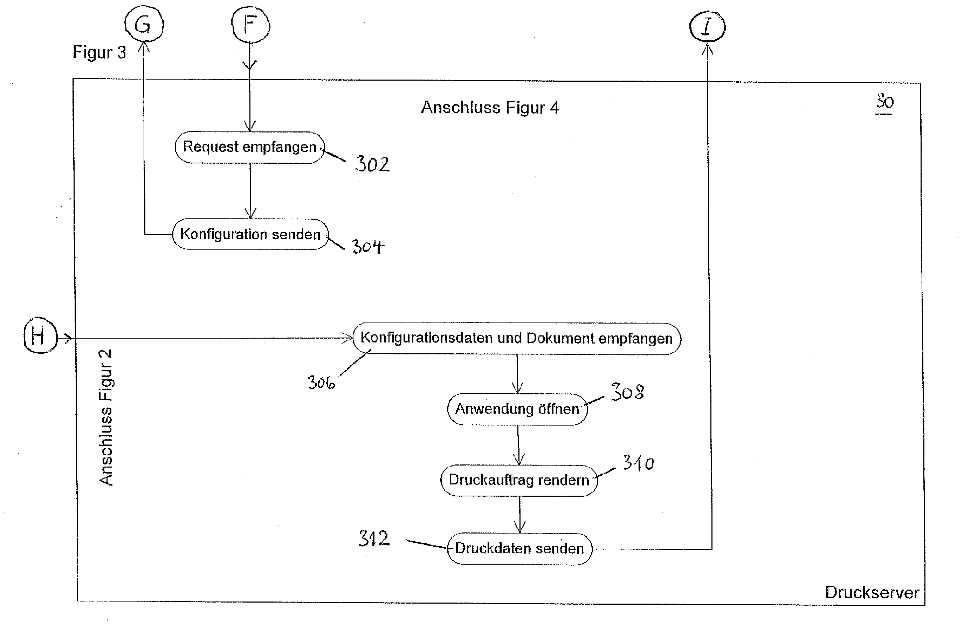

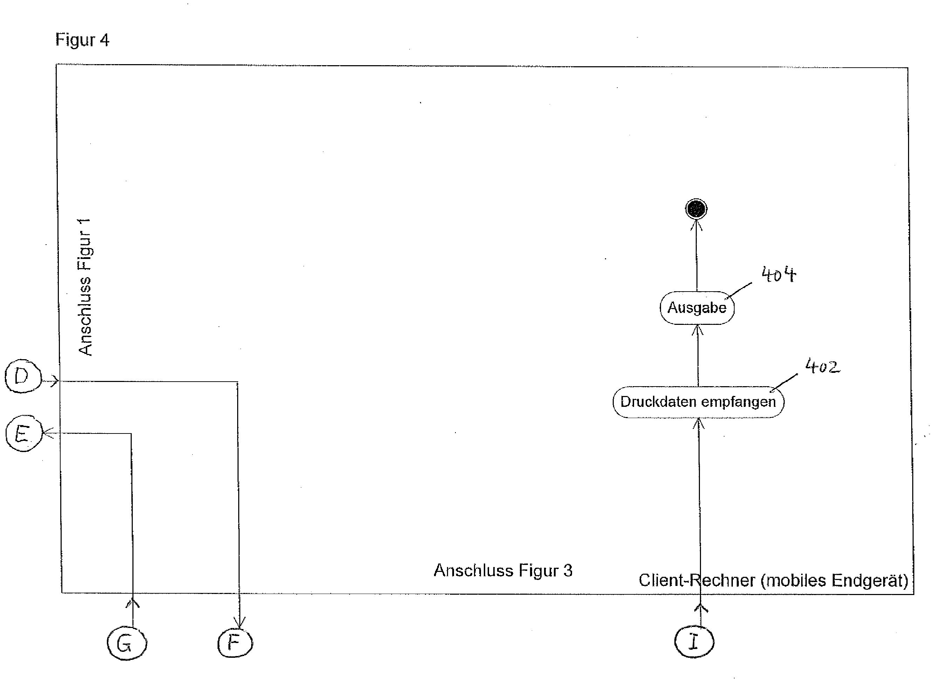

- Figuren 1-4: Datenflüsse und Verfahrensschritte, die beim Drucken aus Web-Anwendungen heraus ablaufen.

Nachfolgend soll die Erfindung an einem speziellen Ausführungsbeispiel näher erläutert werden. Das nachfolgend beschriebene Ausführungsbeispiel betrifft den Ausdruck von Inhalten aus Webseiten eines Dienstleistungsanbieters über einen an das Endgerät 12 lokal angeschlossenen Drucker. Die Erfindung ist jedoch nicht auf dieses spezielle Ausführungsbeispiel beschränkt. Vielmehr kann der Ausdruck auch über einen mit dem Druckserver 30 verbundenen Netzwerkdrucker oder einen Faxdrucker erfolgen.

Hierbei bietet der Dienstleistungsanbieter in einem ersten Schritt 200 Applikationen 22 an, die über Web-Browser 10 abrufbar sind. Dabei kann es sich z. B. um das Ausfüllen von Eingabemasken u.ä. handeln. Die gesamte Applikationslogik befindet sich dabei auf einem Anwendungsserver 20. Für die Nutzerkommunikation werden nur Webseiten generiert. Diese werden von dem Endgerät 12 eines Nutzers, beispielsweise einem mobilen Endgerät, über deren Browserfunktionalitäten genutzt.

Mit Hilfe der Erfindung lassen sich diese Applikationen 22 nun um eine Druckoption erweitern.

Auf dem Endgerät 12 ist in einem speziellen Ausführungsbeispiel eine anwendungsunabhängige Software installiert, die der Kommunikation zwischen Endgerät 12 und dem Druckserver 30 dient, die lediglich durch den Anwendungsserver 20 vermittelt wird.

Da der Nutzer die Applikation 22 nur über den Browser 10 benutzt, ist auf dem Client-Rechner bzw. mobilen Endgerät 12 keine weitere (anwendungsabhängige) Software des Anbieters installiert.

Bei herkömmlichen Lösungen ist eine direkte clientseitige Kommunikation der Applikation 22 mit einem auf dem Client-Endgerät 12 installierten Druckprogramm nicht möglich. Der Dienstleistungsanbieter müsste bei den herkömmlichen Lösungen jeweils spezielle, anwendungsbezogene Software entwerfen bzw. anpassen und auf allen Client-Engeräten 12 installieren. Dies wird durch die Erfindung überflüssig.

Auf dem Endgerät 12 sind nur die vom Nutzer im Browser 10 z.B. in Masken eingegebenen Informationen vorhanden. Das eigentliche (zu druckende) Dokument wird oft auf Serverseite generiert und ist auf dem Endgerät 12 nicht verfügbar.

Einzige Schnittstelle des Endgeräts 12 für den Datenaustausch bei dem erfindungsgemäßen Drucken ist der Browser 10 auf dem Endgerät 12.

Die Identifikation einer jeden darzustellenden Webseite geschieht üblicherweise über den standardisierten Weg der MIME-Types. Kennt der Web-Browser 10 diesen Typ beim Aufruf einer Webseite nicht, sucht er nach einem installierten Plugin, das diesen Typ für ihn darstellen kann. Dieses ist die Standard-Methode, um die Funktionalität eines Browser 10 zu erweitern, um spezielle Webseiten anzuzeigen (z.B. Flash, JAVA Applets u.ä.). Diese Methode wird von der Erfindung für die Kommunikation des Computerprogramms zur Bereitstellung der Eingabemittel mit dem Browser 10 genutzt. Das Computerprogramm zur Bereitstellung der Eingabemittel meldet sich daher automatisch im Browser 10 als ein solches Plugin für einen speziell definierten Typ an.

Der Dienstleistungsanbieter erweitert seine Applikation 22 (in den Webseiten) durch einen Druckbutton, durch dessen Betätigung die serverseitige Erzeugung einer Datei, z.B. eines Dokuments, mit eben diesem speziell definierten MIME-Typen, angestoßen wird.

Nachdem der Nutzer in einem ersten Schritt 100 eine Webseite geöffnet hat, kann er den in die Webseite integrierten Druckbutton nutzen. Wenn der Nutzer nun in Schritt 102 den Druckbutton betätigt, wird in Schritt 104 ein entsprechender Request an den Anwendungsserver 20 gesendet und von diesem in Schritt 202 empfangen. In einem anschließenden Schritt 204 werden serverseitig die auszudruckenden Daten (Dokument) aufbereitet, in Schritt 206 an einem speziellen Speicherort abgelegt, und im darauffolgenden Schritt 208 wird eine Datei mit dem speziell definierten Format erzeugt und an das Endgerät 12 gesendet (Schritt 210). Diese Datei enthält u.a. Angaben darüber, wo das auszudruckende Dokument abgelegt wurde. Diese Angaben können beispielsweise in einer URL (= Uniform Resource Locator), die auf den speziellen Speicherort des auszudruckenden Dokuments verweist, bestehen. Nach Betätigung des Druckbuttons in Schritt 102 werden also durch die Serverapplikation u.a. alle Angaben über auszudruckende Inhalte gespeichert (Schritt 206), ein Link dazu generiert (Session Management) und dieser Link zusammen mit dem MIME-Typen dem Endgerät 12 geschickt (Schritt 210). Der Browser 10 empfängt diese Informationen in Schritt 106, identifiziert in Schritt 108 den MIME-Typ der Datei und ruft im anschließenden Schritt 110 das Computerprogramm zur Bereitstellung der Eingabemittel auf, da er Seiten des speziell definierten MIME-Typs selbst nicht darstellen kann. Statt eine Webseite darzustellen, werden nun die Eingabemittel bereitgestellt, die es ermöglichen, die Konfiguration zu ermitteln, Drucker auszuwählen usw. Vorzugsweise handelt es sich bei den Eingabemitteln um ein Druckmenü. Gleichzeitig stellt das Computerprogramm zur Bereitstellung der Eingabemittel eine Verbindung zu dem Druckserver 30 her, an den der Anwendungsserver 20 die auszudruckenden Daten senden soll, und sendet in Schritt 112 einen Konfigurationsrequest an den Druckserver 30. Nachdem der Druckserver 30 den Konfigurationsrequest in Schritt 302 empfangen hat, übermittelt er in einem anschließenden Schritt 304 Angaben über die Konfiguration an das Endgerät 12, das die Angaben in Schritt 114 empfängt. Über diese Verbindung zwischen Endgerät 12 und Druckserver 30 erhält das Computerprogramm zur Bereitstellung der Eingabemittel somit beispielsweise Informationen über die Konfiguration der verfügbaren Drucker.

Nachdem die Konfigurationsdaten in Schritt 114 von dem Endgerät 12 empfangen wurden, werden diese Daten in einem folgenden Schritt 116 durch weitere Angaben, wie beispielsweise über die Formatierung des Ausdrucks, Angaben zum ausgewählten Drucker o.dgl., die über das Druckmenü eingegeben werden, ergänzt. Die über das Druckmenü ermittelten Informationen werden danach in Schritt 118 zurück an den Anwendungsserver 20 geschickt. Der genaue Ort, wo das zu drukkende Dokument abgelegt ist, wurde dem Client-Rechner bzw. mobilen Endgerät 12 beim Schicken des MIME-Typ-Dokuments als URL mitgeteilt (Schritt 210).

Die gesammelten, über das Druckmenü eingegebenen Informationen werden in einer beispielhaften Ausführung der Erfindung auf dem Web-Standard-Weg (HTTP Upload) an den Anwendungsserver 20 geschickt, ganz so, als ob z.B. ein Nutzer ein Formular aus dem Browser 10 abschickt. Es wird also auch bei der Rückverbindung nur das Internetprotokoll zum Anwendungsserver 20 benutzt. Als besonderes Alleinstellungsmerkmal der Erfindung können hierbei zusätzlich alle auf dem Endgerät 12 ermittelbaren Informationen an den Anwendungsserver 20 weitergegeben werden, wie z. B. Standort, Verbindungsart, Schnittstellenverfügbarkeit.

Das Computerprogramm zur Bereitstellung der Eingabemittel kommuniziert also in einer bevorzugten Ausführungsform mit zwei Gegenstellen, dem Anwendungsserver 20 und dem Druckserver 30, wobei für die Kommunikation mit dem Anwendungsserver 20 vorzugsweise ausschließlich über den Browser 10 kommuniziert wird. Für die Kommunikation mit dem Druckserver 30 kann jede geeignete Kommunikationsverbindung genutzt werden.

Der Anwendungsserver 20 nimmt in einer beispielhaften Ausführungsform die Informationen in Schritt 212 in Empfang und generiert in einem nächsten Schritt 214 eine E-Mail, welche die Konfigurationsdaten enthält und mit dem vorher generierten, die auszudruckenden Daten enthaltenden Dokument als Anhang versehen wird, und veranlasst den Druck.

Dies geschieht in einer beispielhaften Ausführung der Erfindung in Schritt 216 durch Versand dieser E-Mail an den Druckserver 30. Die dafür nötigen Informationen, wie beispielsweise Ziel der E-Mail u.ä., wurden beim Upload in Schritt 118/212 vom Endgerät 12 an den Anwendungsserver 20 mitgesendet und werden vom Anwendungsserver 20 an den Druckserver 30 als Parameter in Form einer E-Mail mit allen Druckinformationen übergeben (Schritt 216/306). Anstelle des Versendens der Parameter und Druckinformationen per E-Mail kann natürlich auch jede andere Übertragungsart, wie beispielsweise eine Kommunikation auf TCP/IP-Basis, genutzt werden um diese Daten zu übertragen.

Der Druckserver startet den Ausdruck und überträgt die Druckdaten an das Endgerät, wobei die Übertragung vorzugsweise als Datenstream erfolgt.

Im einzelnen läuft der Vorgang auf dem Druckserver folgendermaßen ab: Der Druckserver empfängt in Schritt 306 die vom Anwendungsserver 20 versandte E-Mail mit den auszudruckenden Daten und den Konfigurationsdaten, startet in Schritt 308 die zu den auszudruckenden Daten gehörende Anwendung (z.B. bei einem *.doc-Dokument die Anwendung MS-Word), rendert den Druckauftrag in Schritt 310 und sendet anschließend in Schritt 312 die Druckdaten an das Endgerät 12, welches sie in Schritt 402 empfängt und in Schritt 404 an einen lokal an das Endgerät 12 angeschlossenen Drucker übergibt.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch macht.

## Patentansprüche

1. Verfahren zum Drucken aus Web-Anwendungen (22) heraus, wobei auf einem Endgerät (12) ein Browser (10) installiert ist, eine in dem Browser (10) aufgerufene Web-Anwendung (22) auf einem Server eine über Mittel zur Dateneingabe des Endgeräts (12) bedienbare Druckmöglichkeit bereitstellt, welches die folgenden Verfahrensschritte umfasst: Nach Betätigung der Druckmöglichkeit wird der Server (20), auf dem die Web-Anwendung (22) läuft, veranlasst, die auszudruckenden Daten aufzubereiten, und dem Endgerät Daten zu übermitteln, die den Browser veranlassen, ein auf dem Endgerät (12) installiertes Computerprogramm zu starten, wobei das Computerprogramm einen Konfigurations-Request an einen Druckserver sendet und vom Druckserver Konfigurationsdaten erhält; wobei das Computerprogramm die erhaltenen Konfigurationsdaten durch weitere Angaben, die mit Hilfe eines Eingabemittels, welches durch das Computerprogramm zur Verfügung gestellt wird, eingegeben wurden, ergänzt, und wenigstens einen Teil der ergänzten Konfigurationsdaten an den Server überträgt, wobei der Server auszudruckende Dateien zusammen mit den übertragenen Teil der ergänzten Konfigurationsdateien und einer Adresse eines Netzwerkdruckers, eines Faxdruckers und/oder des Endgerätes an einen durch einen Nutzer des Endgerätes vorgegebenen Druckserver (30) sendet,
wobei auf dem Druckserver (30) ein Druckvorgang gestartet wird und
wobei die durch den Druckvorgang erzeugten Daten von dem Druckserver (30) an den Netzwerkdrucker, an den Faxdrucker und/oder an das Endgerät (12) gesendet werden.

2. Verfahren nach Anspruch 1, wobei der Start durch den MIME-Typ (MIME = Multipurpose Internet Mail Extensions) der an das Endgerät (12) übermittelten Daten veranlasst wird.

3. Verfahren nach einem der voranstehenden Ansprüche, wobei die durch den Druckvorgang erzeugten, an das Endgerät (12) gesendeten Daten von dem Endgerät (12) an einen lokal an das Endgerät (12) angeschlossenen Drucker gesendet und dort ausgedruckt werden.

4. Verfahren nach einem der voranstehenden Ansprüche, wobei die durch den Druckvorgang erzeugten Daten als Datenstream an den Netzwerkdrucker, an den Faxdrucker und/oder das Endgerät (12) gesendet werden.

5. Verfahren nach einem der vorangehenden Ansprüche, wobei die von dem Anwendungsserver (20) an das Endgerät (12) übermittelten Daten Angaben umfassen, welche
- den Speicherort von auszudruckenden Daten und/oder
- den MIME-Typ der an das Endgerät (12) übermittelten Daten
bezeichnen.

6. Verfahren nach einem der vorangehenden Ansprüche, wobei sich das Computerprogramm als Plugin im Browser (10) anmeldet.

7. Verfahren nach einem der vorangehenden Ansprüche, wobei die weiteren Angaben, um die die Konfigurationsdateien ergänzt werden,
- Angaben zu dem Drucker, auf dem die auszudruckenden Daten ausgedruckt werden sollen, und
- die Adresse des Druckservers (30), an den der Anwendungsserver (20) den wenigstens einen Teil der von dem Endgerät (12) an den Anwendungsserver (20) übertragenen Daten zusammen mit den auszudruckenden Daten an den Druckserver (30) übertragen soll,
umfassen.

8. Verfahren nach einem der vorangehenden Ansprüche, wobei der wenigstens eine Teil der über die bereitgestellten Eingabemittel eingegebenen Daten durch Vermittlung des Browsers (10) an den Anwendungsserver (20) übermittelt wird.

9. Verfahren nach Anspruch 8, wobei die Übermittlung an den Anwendungsserver (20) als http-Request erfolgt.

10. Verfahren nach einem der vorangehenden Ansprüche, wobei der wenigstens eine Teil der an den Anwendungsserver (20) übertragenen Daten zusammen mit den auszudruckenden Daten über Web-Standardwege an den Druckserver (30) übertragen wird.

11. Anordnung zum Drucken aus Web-Anwendungen (22) heraus, umfassend
mindestens einen Server (20), auf dem die Web-Anwendung (22) läuft,
mindestens einen Druckserver (30) und
mindestens ein mit dem mindestens einen Anwendungsserver (20) und dem mindestens einen Druckserver (30) zusammenwirkendes Endgerät (12), wobei auf dem Endgerät (12) ein Browser (10) und ein Computerprogramm installiert sind, wobei das Computerprogramm ein Eingabemittel zur Verfügung stellt, der mindestens eine Server (20), der mindestens eine Druckserver (30) und das mindestens eine Endgerät (12) wenigstens zeitweise durch Mittel zur Datenübertragung miteinander verbunden sind und die Anordnung derart eingerichtet ist, dass ein Drucken aus Web-Anwendungen (22) heraus durchführbar ist, indem eine in dem Browser (10) aufgerufene Web-Anwendung (22) eine über Mittel zur Dateneingabe des mindestens einen Endgeräts (12) bedienbare Druckmöglichkeit bereitstellt,
bei Betätigung der Druckmöglichkeit der mindestens eine Anwendungsserver (20) veranlasst wird,
auszudruckende Daten aufzuarbeiten und an einen durch einen Nutzer des Endgeräts (12) vorgegebenen Druckserver (30) zu senden,
dem Endgerät Daten zu übermitteln, die den Browser veranlassen, das Computerprogramm zu starten, wobei das Computerprogramm ausgebildet ist, einen Konfigurations-Request an den Druckserver zu senden und vom Druckserver Konfigurationsdaten zu erhalten; wobei das Computerprogramm konfiguriert ist, die erhaltenen Konfigurationsdaten durch weitere, mit Hilfe des Eingabemittels eingebbare Angaben zu ergänzen, und wenigstens einen Teil der ergänzten Konfigurationsdaten an den Server zu übertragen, wobei der Server konfiguriert ist, auszudruckende Dateien zusammen mit den übertragenen Teil der ergänzten Konfigurationsdateien und einer Adresse eines Netzwerkdruckers, eines Faxdruckers und/oder des Endgerätes an den Druckserver zu senden,
wobei auf dem vorgegebenen Druckserver (30) ein Druckvorgang gestartet wird und
wobei die durch den Druckvorgang erzeugten Daten von dem Druckserver (30) an den Netzwerkdrucker, an den Faxdrucker und/oder an das mindestens eine Endgerät (12) gesendet werden.

12. Anordnung nach Anspruch 11, wobei der mindestens eine Anwendungsserver (20) und der mindestens eine Druckserver (30) mit einem Computernetz verbunden sind.

13. Anordnung nach Anspruch 12, wobei es sich bei dem Computernetz um
- ein Local Area Network (LAN),
- ein Metropolitan Area Network (MAN),
- ein Wide Area Network (WAN)
- das Internet oder
- sonstige drahtgebundene oder drahtlose Netze handelt.

14. Anordnung nach einem der Ansprüche 11 bis 13, wobei das mindestens eine Endgerät (12) ein mobiles Endgerät ist.

15. Anordnung nach Anspruch 14, wobei das mobile Endgerät
- ein Mobiltelefon,
- ein Handheld-Gerät,
- ein Personal Digital Assistent (PDA),
- ein mit Nachrichten-Signalisierungs-Service zusammenwirkendes mobiles Endgerät,
- ein Pocket PC oder
- ein Notebook
ist.

16. Computerprogramm, das es einem Computer ermöglicht, nachdem es in Speichermittel des Computers geladen worden ist, ein Verfahren zum Drucken aus Web-Anwendungen (22) heraus durchzuführen, wobei auf einem Endgerät (12) ein Browser (10) und ein Computerprogramm installiert sind und eine in dem Browser (10) aufgerufene Web-Anwendung (22) eine über Mittel zur Dateneingabe des Endgeräts (12) bedienbare Druckmöglichkeit bereitstellt,
bei Betätigung der Druckmöglichkeit ein Server (20), auf dem die Web-Anwendung (22) läuft, veranlasst wird, auszudruckende Daten an einen durch einen Nutzer des Endgeräts (12) vorgegebenen Druckserver (30) zu senden,
dem Endgerät Daten zu übermitteln, die den Browser veranlassen, das Computerprogramm zu starten, wobei das Computerprogramm ausgebildet ist, einen Konfigurations-Request an den Druckserver zu senden und vom Druckserver Konfigurationsdaten zu erhalten; wobei das Computerprogramm konfiguriert ist, die erhaltenen Konfigurationsdaten durch weitere, mit Hilfe des Eingabemittels eingebbare Angaben zu ergänzen, und wenigstens einen Teil der ergänzten Konfigurationsdaten an den Server zu übertragen, wobei der Server konfiguriert ist, auszudruckende Dateien zusammen mit den übertragenen Teil der ergänzten Konfigurationsdateien und einer Adresse eines Netzwerkdruckers, eines Faxdruckers und/oder des Endgerätes an den Druckserver zu senden,
wobei auf dem Druckserver (30) ein Druckvorgang gestartet wird und
die durch den Druckvorgang erzeugten Daten von dem Druckserver (30) an den Netzwerkdrucker, an den Faxdrucker und/oder an das Endgerät (12) gesendet werden.

17. Verfahren, bei dem ein Computerprogramm nach Anspruch 16 aus einem elektronischen Datennetz, wie beispielsweise aus dem Internet, auf eine an das Datennetz angeschlossene Datenverarbeitungseinrichtung heruntergeladen wird.

18. Computerlesbares Speichermedium, auf dem ein Programm gespeichert ist, das es einem Computer ermöglicht, nachdem es in Speichermittel des Computers geladen worden ist, ein Verfahren zum Drucken aus Web-Anwendungen (22) heraus durchzuführen, wobei auf einem Endgerät (12) ein Browser (10) und ein Computerprogramm installiert sind, und eine in dem Browser (10) aufgerufene Web-Anwendung (22) eine über Mittel zur Dateneingabe des Endgeräts (12) bedienbare Druckmöglichkeit bereitstellt,
bei Bedienung der Druckmöglichkeit ein Server (20), auf dem die Web-Anwendung läuft, veranlasst wird, auszudruckende Daten an einen durch einen Nutzer des Endgeräts (12) vorgegebenen Druckserver (30) zu senden,
dem Endgerät Daten zu übermitteln, die den Browser veranlassen, das Computerprogramm zu starten, wobei das Computerprogramm ausgebildet ist, einen Konfigurations-Request an den Druckserver zu senden und vom Druckserver Konfigurationsdaten zu erhalten; wobei das Computerprogramm konfiguriert ist, die erhaltenen Konfigurationsdaten durch weitere, mit Hilfe des Eingabemittels eingebbare Angaben zu ergänzen, und wenigstens einen Teil der ergänzten Konfigurationsdaten an den Server zu übertragen, wobei der Server konfiguriert ist, auszudruckende Dateien zusammen mit den übertragenen Teil der ergänzten Konfigurationsdateien und einer Adresse eines Netzwerkdruckers, eines Faxdruckers und/oder des Endgerätes an den Druckserver zu senden,
wobei auf dem Druckserver (30) ein Druckvorgang gestartet wird und
die durch den Druckvorgang erzeugten Daten von dem Druckserver (30) an den Netzwerkdrucker, an den Faxdrucker und/oder an das Endgerät (12) gesendet werden.

## Claims

1. A method for printing from web applications (22),
wherein a browser (10) is installed on a terminal (12), and a web application (22) on a server and called up in the browser (10) provides a printing option operable using data input means of the terminal (12), said method comprising the following steps:
after actuation of the printing option, the server (20), on which the web application (22) is running, is prompted to prepare the data to be printed out and to transmit to the terminal data which prompt the browser to start up a computer program installed on the terminal (12), wherein the computer program sends a configuration request to a print server and receives configuration data from the print server; wherein the computer program supplements the received configuration data with further details which have been input using an input means provided by the computer program and transfers at least a proportion of the supplemented configuration data to the server,
wherein the server sends files to be printed out together with the transferred proportion of the supplemented configuration files and an address of a network printer, a fax printer and/or the terminal to a print server (30) specified by a user of the terminal,
wherein a printing operation is started on the print server (30) and
wherein the data generated by the printing operation are sent from the print server (30) to the network printer, to the fax printer and/or to the terminal (12) .

2. The method according to Claim 1,
wherein starting is prompted by the MIME type (MIME = Multipurpose Internet Mail Extension) of the data transmitted to the terminal (12).

3. The method according to either one of the preceding claims,
wherein the data generated by the printing operation and sent to the terminal (12) is sent from the terminal (12) to a printer connected locally to the terminal (12) and printed out there.

4. The method according to any one of the preceding claims,
wherein the data generated by the printing operation are sent as a data stream to the network printer, to the fax printer and/or to the terminal (12).

5. The method according to any one of the preceding claims,
wherein the data transmitted by the application server (20) to the terminal (12) comprise details which identify
- the memory location of data to be printed out and/or
- the MIME type of the data transmitted to the terminal (12).

6. The method according to any one of the preceding claims,
wherein the computer program registers itself as a plug-in in the browser (10).

7. The method according to any one of the preceding claims,
wherein the further details by which the configuration files are supplemented comprise
- details relating to the printer on which the data to be printed out are to be printed out, and
- the address of the print server (30) to which the application server (20) is to transfer the at least one proportion of the data transferred by the terminal (12) to the application server (20) together with the data to be printed out to the print server (30).

8. The method according to any one of the preceding claims,
wherein the at least one proportion of the data input via the provided input means is transmitted to the application server (20) through the intermediary of the browser (10).

9. The method according to Claim 8,
wherein transmission to the application server (20) takes the form of an http request.

10. The method according to any one of the preceding claims,
wherein the at least one proportion of the data transferred to the application server (20) is transferred together with the data to be printed out via standard web routes to the print server (30).

11. An arrangement for printing from web applications (22), comprising
at least one server (20), on which the web application (22) is running,
at least one print server (30) and
at least one terminal (12) interacting with the at least one application server (20) and the at least one print server (30), wherein a browser (10) and a computer program have been installed on the terminal (12), wherein the computer program provides an input means, the at least one server (20), the at least one print server (30) and the at least one terminal (12) are connected together at least temporarily by data transmission means and the arrangement is configured such that printing from web applications (22) is feasible, in that
a web application (22) called up in the browser (10) provides a printing option operable via data input means of the at least one terminal (12),
on actuation of the printing option, the at least one application server (20) is prompted to prepare data to be printed out and to send said data to a print server (30) specified by a user of the terminal (12),
to transmit to the terminal data which prompt the browser to start up the computer program, wherein the computer program is designed to send a configuration request to the print server and receive configuration data from the print server; wherein the computer program is configured to supplement the received configuration data with further details inputtable using the input means, and to transfer at least a proportion of the supplemented configuration data to the server, wherein the server is configured to send files to be printed out together with the transferred proportion of the supplemented configuration files and an address of a network printer, a fax printer and/or the terminal to the print server,
wherein a printing operation is started on the specified print server (30) and
wherein the data generated by the printing operation are sent from the print server (30) to the network printer, to the fax printer and/or to the at least one terminal (12).

12. The arrangement according to Claim 11,
wherein the at least one application server (20) and the at least one print server (30) are connected to a computer network.

13. The arrangement according to Claim 12,
wherein the computer network is
- a Local Area Network (LAN),
- a Metropolitan Area Network (MAN),
- a Wide Area Network (WAN)
- the Internet or
- other wired or wireless networks.

14. The arrangement according to any one of Claims 11 to 13,
wherein the at least one terminal (12) is a mobile terminal.

15. The arrangement according to Claim 14,
wherein the mobile terminal is
- a mobile telephone,
- a handheld device,
- a Personal Digital assistant (PDA),
- a mobile terminal interacting with a message signaling service,
- a pocket PC or
- a notebook.

16. A computer program which, once it has been loaded into memory means of a computer, allows the computer to carry out a method for printing from web applications (22), wherein a browser (10) and a computer program have been installed on the terminal (12) and a web application (22) called up in the browser (10) provides a printing option operable via data input means of the terminal (12),
on actuation of the printing option, a server (20), on which the web application (22) is running, is prompted to send data to be printed out to a print server (30) specified by a user of the terminal (12),
to transmit to the terminal data which prompt the browser to start up the computer program, wherein the computer program is designed to send a configuration request to the print server and receive configuration data from the print server; wherein the computer program is configured to supplement the received configuration data with further details inputtable using the input means, and to transfer at least a proportion of the supplemented configuration data to the server, wherein the server is configured to send files to be printed out together with the transferred proportion of the supplemented configuration files and an address of a network printer, a fax printer and/or the terminal to the print server,
wherein a printing operation is started on the print server (30) and
the data generated by the printing operation are sent from the print server (30) to the network printer, to the fax printer and/or to the terminal (12).

17. A method in which a computer program according to Claim 16 is downloaded from an electronic data network, such as for example from the Internet, onto a data processing device connected to the data network.

18. A computer-readable memory medium on which a program is stored which, once it has been loaded into memory means of a computer, allows the computer to carry out a method for printing from web applications (22), wherein a browser (10) and a computer program have been installed on the terminal (12) and a web application (22) called up in the browser (10) provides a printing option operable via data input means of the terminal (12),
on operation of the printing option, a server (20), on which the web application is running, is prompted to send data to be printed out to a print server (30) specified by a user of the terminal (12),
to transmit to the terminal data which prompt the browser to start up the computer program, wherein the computer program is designed to send a configuration request to the print server and receive configuration data from the print server; wherein the computer program is configured to supplement the received configuration data with further details inputtable using the input means, and to transfer at least a proportion of the supplemented configuration data to the server, wherein the server is configured to send files to be printed out together with the transferred proportion of the supplemented configuration files and an address of a network printer, a fax printer and/or the terminal to the print server,
wherein a printing operation is started on the print server (30) and
the data generated by the printing operation are sent from the print server (30) to the network printer, to the fax printer and/or to the terminal (12).

## Revendications

1. Procédé pour l'impression à partir d'applications Web (22),
un navigateur (10) étant installé sur un terminal (12), une application Web (22) appelée dans le navigateur (10) sur un serveur mettant à disposition une possibilité d'impression contrôlable par des moyens pour l'entrée de données du terminal (12), lequel comprend les étapes de procédé suivantes : après l'actionnement de la possibilité d'impression, le serveur (20) sur lequel l'application Web (22) est exécutée, reçoit l'ordre de préparer les données devant être imprimées et de transmettre au terminal des données qui donnent l'ordre au navigateur de démarrer un programme informatique installé sur le terminal (12), le programme informatique envoyant une requête de configuration à un serveur d'impression et recevant des données de configuration du serveur d'impression ; le programme informatique complétant les données de configuration reçues par d'autres informations, lesquelles ont été entrées à l'aide d'un moyen d'entrée, lequel est mis à disposition par le programme informatique, et transmettant au serveur au moins une partie des données de configuration complétées,
le serveur envoyant à un serveur d'impression (30) spécifié par un utilisateur du terminal des fichiers devant être imprimés conjointement avec la partie transmise des fichiers de configuration complétés et une adresse d'une imprimante de réseau, d'une imprimante de fax et/ou du terminal,
un processus d'impression étant démarré sur le serveur d'impression (30) et
les données générées par le processus d'impression étant envoyées par le serveur d'impression (30) à l'imprimante de réseau, à l'imprimante de fax et/ou au terminal (12).

2. Procédé selon la revendication 1,
le démarrage étant ordonné par le type MIME (MIME = Multipurpose Internet Mail Extensions) des données transmises au terminal (12).

3. Procédé selon l'une des revendications précédentes,
les données générées par le processus d'impression, envoyées au terminal (12), étant envoyées par le terminal (12) à une imprimante connectée localement au terminal (12) et y étant imprimées.

4. Procédé selon l'une des revendications précédentes,
les données générées par le processus d'impression étant envoyées comme flux de données à l'imprimante de réseau, à l'imprimante de fax et/ou au terminal (12).

5. Procédé selon l'une des revendications précédentes,
les données transmises par le serveur d'application (20) au terminal (12) comprenant des informations, lesquelles désignent
- le lieu de stockage de données devant être imprimées et/ou
- le type MIME des données transmises au terminal (12).

6. Procédé selon l'une des revendications précédentes,
le programme informatique s'enregistrant comme plug-in dans le navigateur (10).

7. Procédé selon l'une des revendications précédentes,
les autres informations par lesquelles les fichiers de configuration sont complétés comprenant
- des informations relatives à l'imprimante sur laquelle les données devant être imprimées doivent être imprimées, et
- l'adresse du serveur d'impression (30) auquel le serveur d'application (20) doit transmettre au serveur d'impression (30) l'au moins une partie des données transmises au serveur d'application (20) par le terminal (12), conjointement avec les données devant être imprimées.

8. Procédé selon l'une des revendications précédentes,
l'au moins une partie des données entrées par les moyens d'entrée mis à disposition étant transmises au serveur d'application (20) par l'intermédiaire du navigateur (10).

9. Procédé selon la revendication 8,
la transmission au serveur d'application (20) étant effectuée comme requête http.

10. Procédé selon l'une des revendications précédentes, l'au moins une partie des données transmises au serveur d'application (20) étant transmise au serveur d'impression (30) par des voies standard Web, conjointement avec les données devant être imprimées.

11. Agencement pour l'impression à partir d'applications Web (22), comprenant
au moins un serveur (20), sur lequel une application Web (22) est exécutée,
au moins un serveur d'impression (30) et
au moins un terminal (12) interagissant avec l'au moins un serveur d'application (20) et l'au moins un serveur d'impression (30), un navigateur (10) et un programme informatique étant installés sur le terminal (12), le programme informatique mettant à disposition un moyen d'entrée,
l'au moins un serveur (20), l'au moins un serveur d'impression (30) et l'au moins un terminal (12) étant reliés entre eux au moins temporairement par des moyens pour la transmission de données, et l'agencement étant organisé de telle sorte qu'une impression peut être effectuée à partir d'applications Web (22), une application Web (22) appelée dans le navigateur (10) mettant à disposition une possibilité d'impression contrôlable par des moyens pour l'entrée de données de l'au moins un terminal (12),
lors de l'actionnement de la possibilité d'impression, l'au moins un serveur d'application (20) recevant l'ordre de préparer des données devant être imprimées et de les envoyer à un serveur d'impression (30) spécifié par un utilisateur du terminal (12),
de transmettre au terminal des données donnant l'ordre au navigateur de démarrer le programme informatique, le programme informatique étant conçu pour envoyer au serveur d'impression une requête de configuration et pour recevoir des données de configuration par le serveur d'impression ;
le programme informatique étant configuré pour compléter les données de configuration reçues par d'autres informations pouvant être entrées à l'aide du moyen d'entrée, et pour transmettre au serveur au moins une partie des données de configuration complétées, le serveur étant configuré pour envoyer au serveur d'impression des fichiers devant être imprimés conjointement avec la partie transmise des fichiers de configuration complétés et une adresse d'une imprimante de réseau, d'une imprimante de fax et/ou du terminal,
un processus d'impression étant démarré sur le serveur d'impression (30) spécifié et
les données générées par le processus d'impression étant envoyées par le serveur d'impression (30) à l'imprimante de réseau, à l'imprimante de fax et/ou à l'au moins un terminal (12) .

12. Agencement selon la revendication 11,
l'au moins un serveur d'application (20) et l'au moins un serveur d'impression (30) étant reliés avec un réseau informatique.

13. Agencement selon la revendication 12,
le réseau informatique étant
- un réseau local (LAN),
- un réseau métropolitain (MAN),
- un réseau étendu (WAN)
- Internet ou
- d'autres réseaux câblés ou sans fil.

14. Agencement selon l'une des revendications 11 à 13,
l'au moins un terminal (12) étant un terminal mobile.

15. Agencement selon la revendication 14,
le terminal mobile étant
- un téléphone portable,
- un ordinateur de poche,
- un assistant numérique personnel (PDA),
- un terminal mobile interagissant avec des services de signalisation de messages,
- un Pocket PC ou
- un ordinateur portable.

16. Programme informatique permettant à un ordinateur, après avoir été chargé dans des moyens de stockage de l'ordinateur, d'exécuter un procédé pour l'impression à partir d'applications Web (22), un navigateur (10) et un programme informatique étant installés sur un terminal (12), et une application Web (22) appelée dans le navigateur (10) mettant à disposition une possibilité d'impression contrôlable par des moyens pour l'entrée de données du terminal (12),
un serveur (20) sur lequel l'application Web (22) est exécutée recevant l'ordre, lors de l'actionnement de la possibilité d'impression, d'envoyer à un serveur d'impression (30) spécifié par un utilisateur du terminal (12) des données devant être imprimées,
de transmettre au terminal des données donnant l'ordre au navigateur de démarrer le programme informatique, le programme informatique étant conçu pour envoyer au serveur d'impression une requête de configuration et pour recevoir des données de configuration par le serveur d'impression ; le programme informatique étant configuré pour compléter les données de configuration reçues par d'autres informations pouvant être entrées à l'aide du moyen d'entrée, et pour transmettre au serveur au moins une partie des données de configuration complétées, le serveur étant configuré pour envoyer au serveur d'impression des fichiers devant être imprimés conjointement avec la partie transmise des fichiers de configuration complétés et une adresse d'une imprimante de réseau, d'une imprimante de fax et/ou du terminal,
un processus d'impression étant démarré sur le serveur d'impression (30) et
les données générées par le processus d'impression étant envoyées par le serveur d'impression (30) à l'imprimante de réseau, à l'imprimante de fax et/ou au terminal (12).

17. Procédé par lequel un programme informatique selon la revendication 16 est téléchargé, à partir d'un réseau de données électronique, comme Internet, par exemple, sur une installation de traitement des données connectée au réseau de données.

18. Support de stockage lisible par ordinateur, sur lequel un programme est enregistré, lequel permet à un ordinateur, après avoir été chargé dans des moyens de stockage de l'ordinateur, d'exécuter un procédé pour l'impression à partir d'applications Web (22), un navigateur (10) et un programme informatique étant installés sur un terminal (12), et une application Web (22) appelée dans le navigateur (10) mettant à disposition une possibilité d'impression contrôlable par des moyens pour l'entrée de données du terminal (12),
un serveur (20) sur lequel l'application Web est exécutée recevant l'ordre, lors de l'actionnement de la possibilité d'impression, d'envoyer à un serveur d'impression (30) spécifié par un utilisateur du terminal (12) des données devant être imprimées,
de transmettre au terminal des données donnant l'ordre au navigateur de démarrer le programme informatique, le programme informatique étant conçu pour envoyer au serveur d'impression une requête de configuration et pour recevoir des données de configuration par le serveur d'impression ; le programme informatique étant configuré pour compléter les données de configuration reçues par d'autres informations pouvant être entrées à l'aide du moyen d'entrée, et pour transmettre au serveur au moins une partie des données de configuration complétées, le serveur étant configuré pour envoyer au serveur d'impression des fichiers devant être imprimés conjointement avec la partie transmise des fichiers de configuration complétés et une adresse d'une imprimante de réseau, d'une imprimante de fax et/ou du terminal,
un processus d'impression étant démarré sur le serveur d'impression (30) et
les données générées par le processus d'impression étant envoyées par le serveur d'impression (30) à l'imprimante de réseau, à l'imprimante de fax et/ou au terminal (12).
